(19) Europäisches Patentamt
European Patent Office
Office européen des brevets

(11) **EP 2 686 699 B1**

(12) **FASCICULE DE BREVET EUROPEEN**

(45) Date de publication et mention
de la délivrance du brevet:
**01.04.2015 Bulletin 2015/14**

(21) Numéro de dépôt: **12703129.2**

(22) Date de dépôt: **13.02.2012**

(51) Int Cl.:
*G01S 13/02* $^{(2006.01)}$     *G01S 7/36* $^{(2006.01)}$
*G01S 13/90* $^{(2006.01)}$

(86) Numéro de dépôt international:
**PCT/EP2012/052376**

(87) Numéro de publication internationale:
**WO 2012/123202 (20.09.2012 Gazette 2012/38)**

(54) **PROCEDE DE SURVEILLANCE RADAR ET D'ACQUISITION DE SIGNAUX RADAR**

VERFAHREN ZUR RADARÜBERWACHUNG UND RADAR SIGNALERFASSUNG

METHOD OF RADAR SURVEILLANCE AND OF RADAR SIGNAL ACQUISITION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.03.2011 FR 1100803**

(43) Date de publication de la demande:
**22.01.2014 Bulletin 2014/04**

(73) Titulaire: **THALES**
**92200 Neuilly-sur-Seine (FR)**

(72) Inventeurs:
• **CORNIC, Pascal**
**29820 Guilers (FR)**
• **JAHAN, Daniel**
**29820 Bohars (FR)**
• **GARREC, Patrick**
**33700 Merignac (FR)**

(74) Mandataire: **Henriot, Marie-Pierre**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A2- 0 747 722     EP-A2- 0 810 448
FR-A1- 2 884 929     FR-A1- 2 904 696
US-A1- 2005 179 584

EP 2 686 699 B1

**Description**

Le domaine de l'invention est celui des charges utiles embarquées pour des missions d'observation et de surveillance air-sol ou air-mer, notamment les radars pour aéronefs de petite et moyenne dimension, pour lesquels le volume, la masse et le coût sont très contraints.

D'un point de vue physico-opérationnel, une fonction radar a pour but de détecter et de localiser les objets matériels situés dans un environnement, plus ou moins lointain, d'un porteur. Parmi ces objets sont évidemment les plates-formes ou les véhicules se trouvant dans cet environnement. Ce point de vue peut être complété par des visions de l'environnement selon d'autres domaines d'objets physiques. Parmi ceux-ci, sont les émissions radar en provenance des autres plates-formes. Une fonction de mesures de recherche électronique (MRE) ou « ESM » sigle de l'expression anglo-saxonne « Electronic Support Measure », a justement pour but de s'intéresser à ces objets émission radar. L'intérêt est au moins double car, d'une part, une vision selon différents domaines assure une perception consolidée de l'environnement, à la fois plus fiable et plus robuste, et d'autre part, la diversité des caractéristiques des émissions radar a fait qu'une fonction ESM possède une capacité d'identification non coopérative assez remarquable (« NCTR : Non Coopérative Target Récognition »).

Il est souvent intéressant de compléter une ou des fonctions radar par une fonction ESM pour une meilleure perception de la scène observée. L'utilisation conjointe des techniques radar et ESM est en effet apte à fournir des informations de nature à classifier, voire à identifier une cible lorsque celle-ci est équipée d'un radar en émission.

Habituellement, les fonctions radar et ESM sont obtenues en intégrant sur le porteur des équipements distincts n'ayant strictement aucun élément matériel commun, fonctionnant sur des gammes de fréquence assez différentes. Chaque équipement possède ses propres dispositifs, qu'ils soient antennaires, de réception ou d'émission, et de traitement, ce qui augmente le volume, la masse et le coût de l'ensemble. Par ailleurs, cette architecture rend complexe l'intégration sur le porteur et pose toujours des problèmes de compatibilité électromagnétique entre les fonctions radar et la fonction ESM, car cette dernière est par principe faite pour recevoir les émissions des radars.

Typiquement, si l'aéronef doit être équipé d'une fonction radar et d'une fonction ESM, la couverture ESM est assurée par des antennes très large bande et à faible gain disposées sur la peau de l'aéronef de façon à couvrir 360°, tandis que la fonction radar est réalisée à l'aide d'une structure antennaire spécifique, pouvant fonctionner en balayage mécanique ou en balayage électronique. Le document FR2884929 décrit un procédé de localisation passive de cible en utilisant l'antenne radar en mode de réception passive et en abonnant cette antenne passive au récepteur de guerre électronique. Il existe aussi d'autres possibilités mettant en oeuvre des antennes réseau dont l'élément rayonnant est très large bande, associées à un grand nombre de voies émission-réception.

Sur des porteurs de petite dimension, les contraintes d'intégration et de coût peuvent interdire l'implantation de telles fonctions.

En conséquence, il demeure à ce jour un besoin pour un système donnant simultanément satisfaction à l'ensemble des exigences précitées, en termes de fonctions radar et ESM, de leur compatibilité électromagnétique, de volume, de masse et de coût contraints.

L'invention repose sur la mise en oeuvre de plusieurs principes combinés :

- utiliser la directivité angulaire de l'antenne du radar employé comme base, pour favoriser la détection d'au moins une émission radar autre donnée dans une scène chargée,
- réaliser une estimation des paramètres du train d'impulsions de l'émission radar d'intérêt, à la fois sur la fréquence porteuse, la fréquence de répétition et la largeur des impulsions, pour asservir la forme d'onde du radar (notre fonction) à la forme d'onde de l'émission du radar d'intérêt,
- utiliser la résolution distance de la fonction radar, pour isoler temporellement l'émission d'au moins un radar d'intérêt, à l'aide d'un corrélateur spécifique,
- utiliser la résolution fréquentielle et l'agilité de fréquence de la fonction radar, pour isoler les signaux reçus de l'émission d'au moins un radar d'intérêt,
- construire à la réception, un filtre adapté pour un train d'impulsions de l'émission d'au moins un radar d'intérêt,
- asservir la synchronisation et la durée de la récurrence radar sur le ou les radars détectés.

Plus précisément l'invention a pour objet un procédé de surveillance par un radar dit radar 1 équipé :

- d'une structure antennaire à directivité angulaire, par exemple inférieure à 10°,
- de moyens d'émission d'un signal impulsionnel S1 dans une bande de fréquence centrée sur une fréquence F1 au moyen d'un oscillateur local, selon une période de répétition centrée sur une période de récurrence Tr1 et de largeur d'impulsion T1,
- de moyens de réception de signaux par ladite structure d'antenne dans une bande de fréquence $\Delta F$,
- d'une unité de traitement des signaux reçus sur un ensemble de N cases distances.

Il est principalement caractérisé en ce que des signaux reçus étant émis par un autre radar dit radar 2 dans une bande de fréquence centrée sur une fréquence F2 telle que F2-F1 ≤ ΔF, selon une période de répétition centrée sur une période Tr2 et de largeur d'impulsion T2, les signaux émis par le radar 1 et le radar 2 étant asynchrones, il comprend les étapes suivantes réalisées par ladite unité de traitement, pour assurer une fonction ESM :

- A) asservissement de la fréquence F1 à la fréquence F2, en mesurant la puissance reçue intégrée sur l'ensemble des N cases distances et sur plusieurs récurrences,
- B) détermination de la période Tr2 et de T2 et asservissement de la période centrée sur Tr1 à une période centrée sur Tr2 avec Tr1 multiple de Tr2 (Tr1 = k Tr2 avec k entier positif) ou sous-multiple de Tr2 (Tr1 = Tr2/k avec k entier positif).

Ce procédé permet d'utiliser l'électronique du radar pour réaliser en plus des fonctions radar, une fonction ESM dans une bande limitée autour de la fréquence de fonctionnement du radar, sans augmenter de façon significative le volume, la masse, la consommation, ni le coût de l'équipement.

Un autre avantage de la solution proposée est d'optimiser le taux d'utilisation de l'électronique embarquée, les fonctions radar et ESM pouvant être réalisées simultanément et sans temps mort, avec le même équipement.

Elle permet également l'analyse fine des impulsions d'un radar, à des fins de classification ou d'identification.

Selon une caractéristique de l'invention, l'asservissement de F1 à F2 est réalisé hors émission du radar 1 et comprend une sous-étape consistant à faire varier la fréquence de l'oscillateur local jusqu'à obtenir un maximum de puissance du signal reçu, la fréquence de l'oscillateur local étant fixée à la valeur correspondant à ce maximum de puissance.

Selon une autre caractéristique de l'invention, la détermination de Tr2 et de T2 est basée sur l'autocorrélation temporelle de l'amplitude du signal reçu effectuée sur un temps supérieur à un seuil prédéterminé.

De préférence, le signal S1 émis par le radar 1 étant synchronisé par un signal de synchronisation, l'autocorrélation est synchronisée par ce signal de synchronisation.

Cette détermination de Tr2 et de T2 est avantageusement réalisée hors émission de S1.

Selon un mode de réalisation de l'invention, le signal émis par le radar 1 étant synchronisé par un signal de synchronisation, ce signal de synchronisation est adapté pour que les signaux du radar 2 soient reçus dans une fenêtre temporelle déterminée en fonction de ce signal de synchronisation.

Cela permet ainsi de limiter la gêne occasionnée par des impulsions d'un autre radar émettant par ailleurs, en confinant cette gêne dans une tranche temporelle réduite.

Dans certains cas on fait en sorte que, chaque récurrence de la période de répétition comportant des cases distance temporelles, certaines cases distance prédéterminées soient allouées à la réception d'échos générés par les impulsions émises par le radar 1.

Les étapes A) et B) peuvent être réalisées de façon séquentielle selon des intervalles de temps prédéterminés, ou de façon enclenchée suite à la détection d'un asynchronisme du signal reçu par rapport au signal émis par le radar 1 ou d'une puissance de signal dépassant un seuil prédéterminé.

Le radar1 peut être successivement en mode émission-réception et en mode réception sans émission.

L'antenne du radar 1 est par exemple en rotation en azimut.

Lorsque des signaux reçus sont émis par d'autres radars dits radar 3, radar 4, ... radar n respectivement associés aux fréquences F3 avec F3-F1≤ΔF, F4 avec F4-F1≤ΔF, ..., Fn avec Fn-F1≤ΔF aux périodes de répétition Tr3, Tr4, .. Trn et aux largeurs d'impulsion T3, T4, ...Tn, les signaux émis par le radar 1 et les radar 3, radar 4 ,... radar n étant asynchrones, il comprend les étapes A) et B) séquentiellement réalisées pour F3, Tr3, T3 puis F4, Tr4, T4, puis ....Fn, Trn, Fn.

De préférence, l'application principale est centrée sur une tête radar dimensionnée pour fonctionner en bande X, car c'est la bande utilisée pour les radars aéroportés.

Plus particulièrement, on cherche à réaliser simultanément ou séquentiellement des fonctions SAR, GMTI et ESM à partir d'un dispositif antennaire unique, tout en minimisant le volume d'électronique à mettre en oeuvre.

D'autres caractéristiques et avantages de l'invention apparaîtront à la lecture de la description détaillée qui suit, faite à titre d'exemple non limitatif et en référence aux dessins annexés dans lesquels :

la figure 1 a est une représentation temporelle schématique des signaux émis et reçus par le radar 1, et la figure 1b représente schématiquement un écran radar sur lequel apparaissent différentes détections visibles au cours de la rotation de l'antenne du radar,

la figure 2a représente schématiquement les principaux éléments d'un radar, la figure 2b représente schématiquement une variation en dent de scie de la fréquence Fol de l'oscillateur local du radar 1 jusqu'à l'obtention d'un maximum de puissance dans le récepteur,

la figure 3 représente schématiquement un cas particulier de la figure 2a avec l'introduction d'une transformée de Fourier rapide pour séparer la réception en plusieurs canaux fréquentiels avant de séparer les signaux temporellement,

la figure 4 illustre schématiquement la série d'échantillons utilisés dans le récepteur du radar 1 pour estimer l'autocorrélation des impulsions reçues du radar 2, sur un temps long,

la figure 5 représente schématiquement la fonction d'autocorrélation du peigne des impulsions reçues du radar 2,

la figure 6 représente schématiquement le cas où Tr1 est asservie sur Tr2,

la figure 7 représente schématiquement le cas où Tr1 est asservie sur un multiple de Tr2,

la figure 8 représente schématiquement le cas où Tr1 est asservie sur un sous-multiple de Tr2.

D'une figure à l'autre, les mêmes éléments sont repérés par les mêmes références.

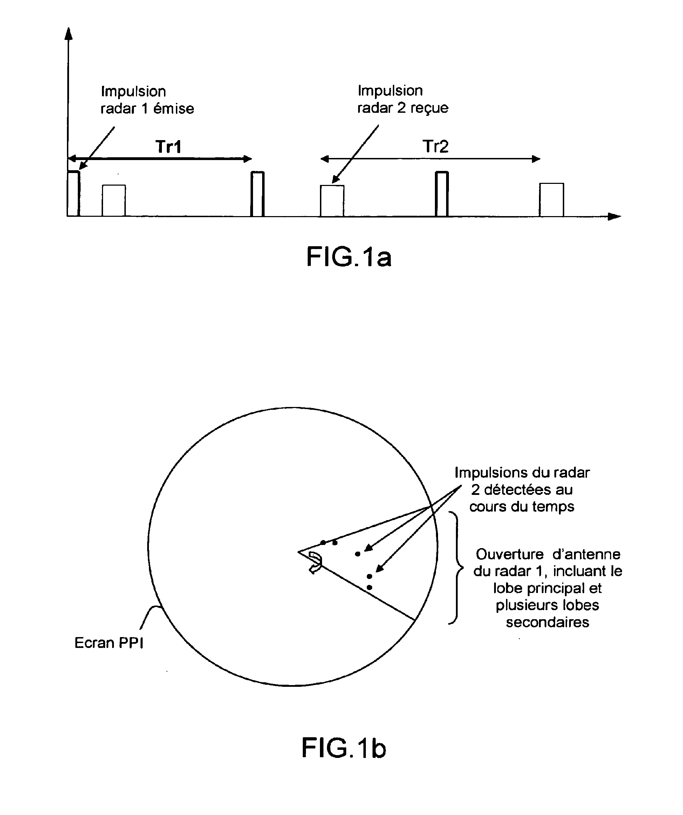

On considère en relation avec la figure 1 a un radar à impulsions fonctionnant sur une fréquence d'émission F1, de largeur d'impulsion T1 et de période de répétition Tr1 (aussi désignée période de récurrence). En fait dans la pratique le radar fonctionne dans une bande de fréquence centrée sur F1 avec une période de répétition centrée sur Tr1.

Par ailleurs, on suppose que ce radar possède une faible ouverture angulaire $\Delta\theta1$ à environ 3dB dans le plan de recherche considéré (classiquement le plan gisement qui est horizontal), soit $\Delta\theta1$ typiquement inférieur à 5°. L'antenne peut être à balayage mécanique ou à balayage électronique en émission ou en réception avec une période de balayage régulière ou non.

Pour la simplicité de la description, on appelle ce radar, radar 1.

On suppose qu'un radar autre, dénommé par la suite radar 2, est présent dans l'environnement du radar 1, et en émission dans sa direction de visée (ou au voisinage) et dans une bande de fréquence relativement proche : le signal émis par le radar 2 peut alors être capté par le dispositif de réception du radar 1 (antenne et récepteur).

Dans le cas général, ce radar 2 dispose d'une fréquence d'émission F2, d'une durée d'impulsion T2 et d'une période de répétition Tr2. De même que pour le radar 1, dans la pratique le radar 2 fonctionne dans une bande de fréquence centrée sur F2 avec une période de répétition centrée sur Tr2. Ces valeurs sont différentes a priori de celles du radar 1.

En fonction de l'écart de fréquence d'émission entre les deux radars, F2-F1, les signaux émis par le radar 2 pénètrent ou non dans le récepteur du radar 1.

Dans le cas où l'écart de fréquence F2-F1 est inférieur à la bande de réception du récepteur $\Delta F$ du radar 1, ces signaux peuvent être détectés car pénétrant le dispositif de réception du radar 1.

Par ailleurs, les deux émissions (du radar 1 et du radar 2) sont asynchrones et les impulsions peuvent être modulées ou non.

Les signaux étant asynchrones, l'impulsion reçue du radar 2 se déplace dans la récurrence du radar 1, de récurrence à récurrence, en fonction de la différence de période des trains d'impulsions 1 et 2.

La représentation temporelle des signaux émis et reçus par le radar 1 est alors conforme à la figure 1a.

Selon la représentation classique d'un écran radar PPI (sigle de l'expression anglo-saxonne « Plane Position Indicator »), cette situation apparaît sous forme de portions de spirales correspondant aux différentes détections visibles au cours de la rotation d'antenne, conformément à la figure 1 b. Cela est notamment dû au fait que le signal reçu du radar 2 est très puissant, et visible y compris par les lobes secondaires de l'antenne du radar 1 : ainsi, les impulsions reçues du radar 2 semblent se déplacer en radial et en angle d'azimut lorsque l'antenne tourne.

Dans ces conditions, un traitement radar classique qui associe de récurrence à récurrence les échos reçus dans une même cellule de résolution distance encore appelée case distance, ne peut pas utiliser toute l'énergie disponible pour réaliser la détection et l'analyse du train d'impulsions reçu.

Par ailleurs, l'émission du radar 2 est vue comme un bruit temporellement aléatoire pouvant limiter les capacités de détection du radar 1. En effet, les échos dont le rapport signal-à-bruit est généralement plus faible que celui des signaux provenant du radar 2, peuvent être noyés dans les signaux du radar 2.

Le traitement proposé consiste à rechercher la présence d'un radar 2 dans une bande donnée, puis à adapter le traitement radar 1 de façon à confiner le signal reçu du radar 2 dans la cellule de confusion du radar 1. Il comprend deux étapes principales : la recherche du radar 2, puis dans un deuxième temps l'estimation de la fréquence de répétition Tr2 et de la largeur d'impulsion T2 du radar 2.

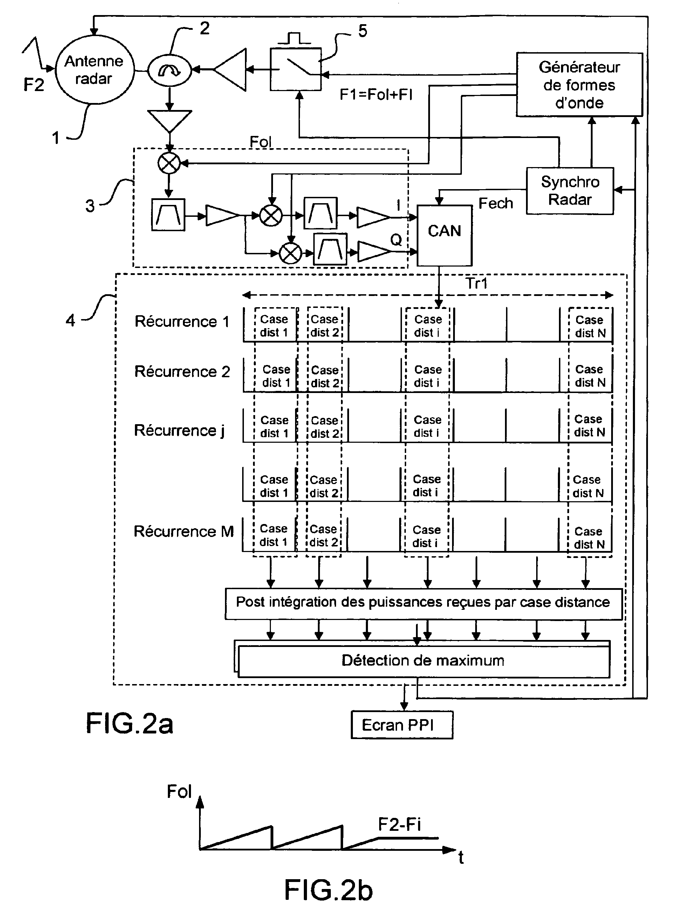

On rappelle les principaux éléments d'un radar 1 en relation avec la figure 2a.

Il comporte comme moyens de réception : une antenne de réception 1, un circulateur 2, un démodulateur 3 relié à l'oscillateur local, un convertisseur analogique-numérique des signaux reçus démodulés I, Q relié lui-même relié à un élément de synchronisation radar, les signaux convertis étant transmis à une unité de traitement 4, reliée à un écran PPI.

Il comporte comme moyens d'émission : un générateur de formes d'onde relié à l'unité de traitement 4 et à l'élément de synchronisation, une antenne d'émission 1 qui est généralement la même que l'antenne de réception, un interrupteur 5 pour éventuellement bloquer l'émission.

La recherche du radar 2 s'effectue d'abord en mesurant la puissance reçue intégrée sur l'ensemble des N cases distances et sur un certain nombre M de récurrences.

Cette recherche s'effectue par exemple en faisant varier la fréquence de l'oscillateur local du radar Fol jusqu'à obtention d'un maximum de puissance dans le récepteur, conformément aux figures 2.

Classiquement, cette recherche peut s'effectuer par un balayage fréquentiel en dent de scie, selon la représentation de la figure 2b. Ce balayage peut être réalisé de façon continue, séquentielle selon des intervalles de temps prédéterminés, ou enclenchée suite à la détection d'une puissance de signal anormalement élevée et prédéterminée ou d'une différence de forme d'onde entre le signal reçu et le signal émis par le radar 1.

Après détection d'un maximum de puissance reçue dans la bande de fréquence balayée, la fréquence Fol de l'oscillateur local est fixée à la valeur correspondant au maximum de puissance détectée.

On réalise ainsi un contrôle automatique de fréquence grossier visant à asservir la fréquence F1 du radar 1 sur celle F2 du radar 2.

En présence de plusieurs radars, le même traitement peut être effectué séquentiellement sur différents « autres » émetteurs désignés radar 2, radar 3, ....

Dans certains cas, il peut être intéressant de séparer la réception en plusieurs canaux fréquentiels avant de séparer les signaux temporellement, de façon à augmenter la capacité de discrimination du radar.

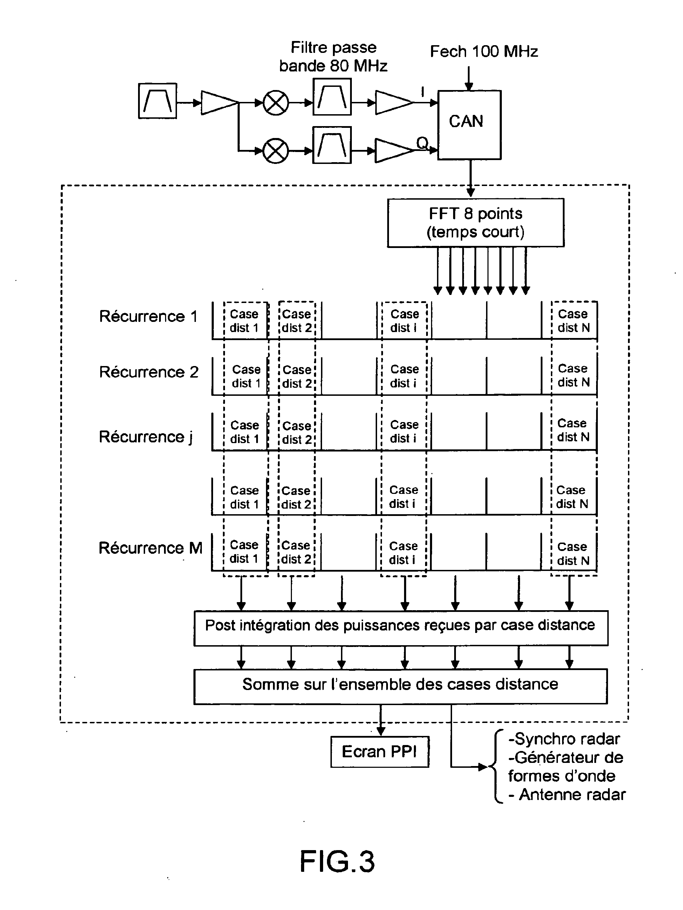

Ceci peut s'effectuer par exemple en réalisant une transformée de Fourier rapide (FFT) sur un temps réduit après codage des signaux, comme illustré figure 3. On entend par temps réduit, une durée inférieure ou égale à la durée de l'impulsion reçue attendue la plus courte, correspondant à un petit nombre d'échantillons successifs du signal codé.

Typiquement, pour un radar possédant une bande de réception de 80MHz, et un échantillonnage à 100MHz, on pourra effectuer une FFT sur 8 points, ce qui revient à séparer les signaux par 8 filtres de 12,5MHz.

Ce procédé permet de diminuer la probabilité de présence de signaux provenant de plusieurs « autres » émetteurs dans le même canal de réception F1 du radar 1.

Dans un deuxième temps, le traitement effectue une autocorrélation temporelle sur l'amplitude du signal reçu sur un temps long, ce temps étant typiquement supérieur à plusieurs fois (c'est-à-dire au moins 2) la durée de la récurrence supposée du radar 2 Tr2', de façon à percevoir cette récurrence.

Si x(i) est l'amplitude de l'échantillon temporel i détecté en sortie codeur, l'autocorrélation effectue l'opération :

$$C(k) = \sum_{i=1}^{N-k} ((x(i) - moy(x))(x(i+k) - moy(x)))/N$$

.

Ce traitement vise à estimer la fréquence de répétition Tr2 et la largeur d'impulsion T2 du radar 2. Il est appliqué en sortie du codeur ou, le cas échéant, après la transformée de Fourier effectuée sur le temps réduit.

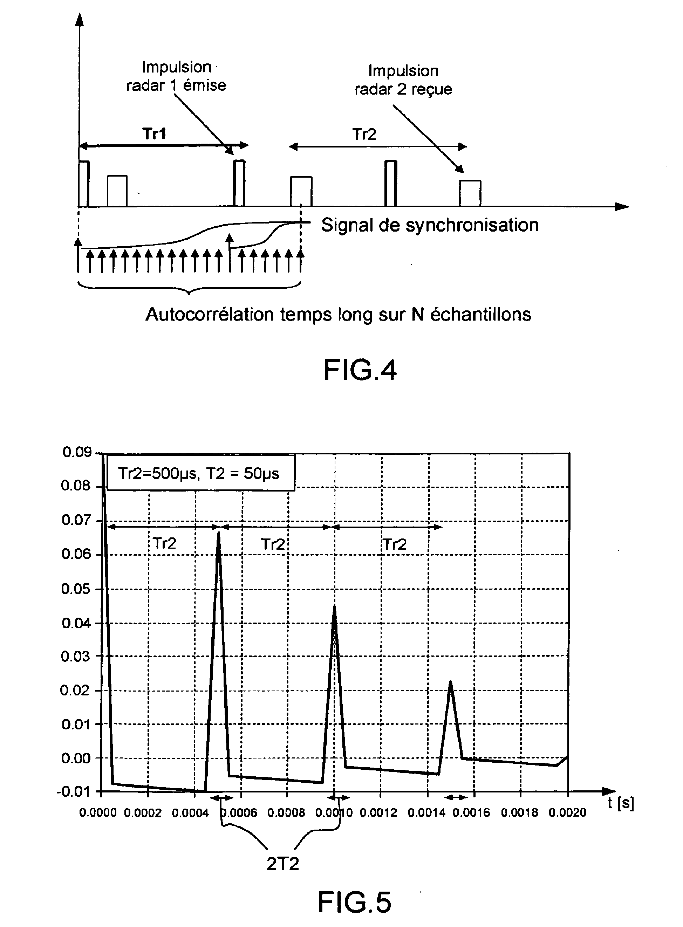

Cette autocorrélation est synchronisée par le signal de synchronisation d'émission du radar, comme le montre la figure 4.

La fréquence d'échantillonnage est choisie supérieure à l'inverse de la largeur de l'impulsion de durée minimale que l'on souhaite détecter, typiquement 100MHz pour une durée minimale de 20ns.

La durée temporelle de la fenêtre d'analyse est choisie au moins égale à deux fois la durée maximum de la période de répétition Tr2 que l'on souhaite détecter, typiquement 2,5ms pour une période de répétition de durée maximale 1 ms.

Ce traitement peut éventuellement être répété plusieurs fois pour améliorer la qualité de l'estimation.

En sortie du traitement de corrélation, on obtient une suite d'impulsions triangulaires, la distance entre deux impulsions successives correspondant à la période de récurrence Tr2 des impulsions et la largeur à la base de ces impulsions correspondant à deux fois la largeur de l'impulsion élémentaire T2, comme le montre à titre d'exemple la figure 5.

Cette opération est effectuée de façon préférentielle hors émission. Elle peut cependant être effectuée en émission en bloquant la réception pendant la durée du signal d'émission.

Après estimation des paramètres de modulation d'enveloppe du radar 2, la fréquence de répétition du radar 1 (Tr1) est asservie sur la fréquence de répétition du radar 2 (Tr2).

Selon le mode de fonctionnement choisi, la période de répétition des impulsions du radar 1 est choisie égale à la fréquence de répétition du radar 2, à un multiple (Tr1 = k. Tr2 avec k entier positif) ou à un sous-multiple (Tr1 = Tr2/k avec k entier positif).

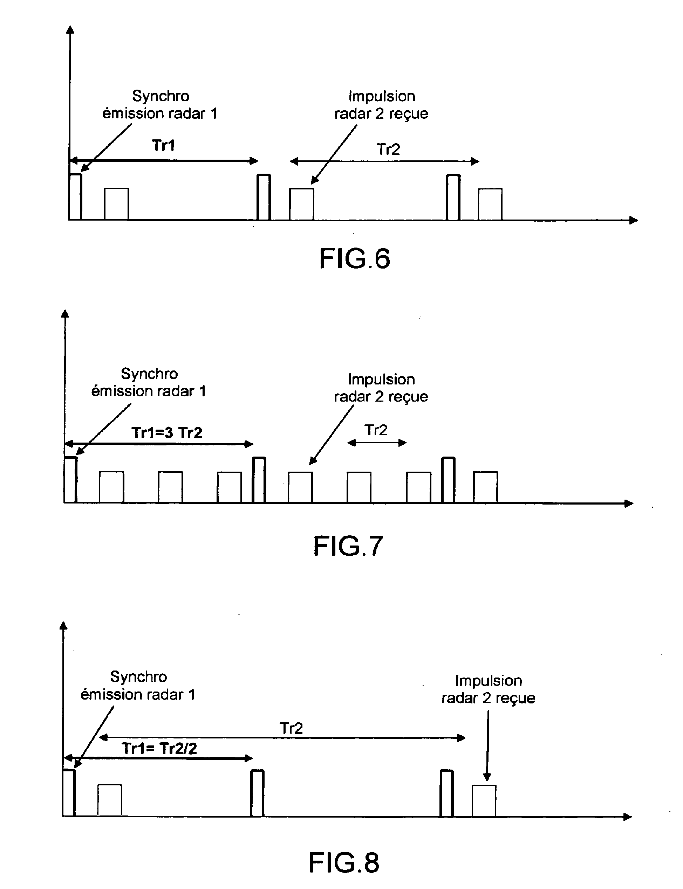

Lorsque le radar 1 est en mode écoute seule, c'est-à-dire lorsqu'il n'émet absolument pas, sa période de répétition Tr1 sera préférentiellement choisie égale à la fréquence de répétition Tr2 du radar 2 (on a donc k=1), de façon à ce que le train d'impulsion du radar 2 génère une impulsion unique et fixe de récurrence à récurrence dans le récepteur du radar 1, conformément à la figure 6. Bien qu'il n'y ait pas d'émission du radar 1, on asservit quand même Tr1 car il est intéressant que les impulsions reçues du radar 2 apparaissent fixes, toujours au même endroit de récurrence à récurrence.

Lorsque le radar est en mode émission, la période de récurrence Tr1 est habituellement choisie en fonction de la portée instrumentée désirée, correspondant à une distance non ambiguë D, avec D = (c.Tr1)/2, où c est la vitesse de propagation des ondes d'intérêt, cf. celle de la lumière.

Dans ce cas, si la période Tr2 du radar 2 est faible devant la valeur correspondant à D, on choisit préférentiellement comme valeur de Tr1, un multiple de Tr2 supérieur à la valeur correspondant à la distance D, c'est-à-dire k entier supérieur à 1.

Par exemple, pour une distance instrumentée de 40nmi (nautical mile international = 1852m), soit environ 74km, la période de récurrence Tr1 doit être supérieure à 493µs. On rappelle que la distance instrumentée est la portée jusqu'où on cherche à détecter.

Si le radar 2 a une période de répétition Tr2 de 200µs, Tr1 peut être choisie égale à 600µs (Tr1 est multiple de Tr2, Tr1 = Tr2 k avec k=3). De cette façon, à chaque récurrence du radar 1, le récepteur voit 3 impulsions apparaissant en position fixe dans ses cases distance, conformément à la figure 7.

Au contraire, si la période Tr2 du radar 2 est grande devant la valeur correspondant à D, Tr1 peut être choisie égale à Tr2 ou à l'un de ses sous-multiples, alors Tr1 = Tr2/k avec k entier positif.

Par exemple, pour D = 40nmi (493µs) et Tr2 =1ms, on pourra choisir Tr1=500µs (Tr1 = Tr2/k avec k=2). Dans ce cas, le radar 2 produit une impulsion stable dans le récepteur du radar 1 une récurrence sur 2, conformément à la figure 8.

Dans tous les cas, la fréquence de répétition Tr1 du radar 1 est choisie (c'est-à-dire multiple ou sous-multiple, et k choisi) pour que les impulsions reçues du radar 2 apparaissent fixes dans le récepteur du radar 1.

Dans la mesure où T2<<Tr1 (on a typiquement T2= Tr1/100 voire Tr1/1000), ceci permet en outre de maintenir une partie très importante de la portée instrumentée en zone « claire », c'est-à-dire non perturbée par le radar 2.

Une autre solution est de lancer un corrélateur externe, qui va réaligner les impulsions en tenant compte de la différence de période entre les deux radars.

Cela permet également d'effectuer des traitements spécifiques sur les impulsions reçues du radar 2, à des fins de classification ou d'identification en affectant quelques cases distances adaptées à la durée d'impulsion du radar 2 dans la récurrence, au traitement de ces impulsions. Les traitements peuvent concerner les caractéristiques fines de l'impulsion : modulations intra-impulsion volontaires ou involontaires (de phase, de fréquence, d'amplitude), ou encore les variations d'impulsion à impulsion (de phase, d'amplitude, de fréquence), voire les modulations de lobe d'antenne, etc.

Ce procédé permet par ailleurs d'optimiser les ressources du radar.

Afin de maintenir les propriétés de stabilité temporelle des impulsions dans le temps l'asservissement de la période de récurrence peut s'effectuer séquentiellement de rafale à rafale, le terme rafale désignant ici un nombre entier de récurrence du radar 1 sur lequel un traitement doppler cohérent est effectué : cas du SAR (synthetic aperture radar), de l'ISAR (inverse synthetic aperture radar) ou du GMTI (ground moving target indication) par exemple. Dans ce cas, un traitement d'association et de pistage est effectué sur les signaux ESM et radar, ce traitement consistant à associer les détections ESM et radar en corrélant les signaux issus des mêmes directions angulaires dans l'objectif d'associer un radar 2 donné à la cible radar qui le porte.

L'utilisation conjointe des techniques radar et ESM est en effet apte à fournir des informations de nature à classifier, voire à identifier une cible lorsque celle ci est équipée d'un radar en émission.

Il est également possible de placer la synchro radar en fonction des zones « claires » souhaitées.

On souhaite par exemple que les échos du radar 1 ne soient pas perturbés par les impulsions reçues du radar 2, c'est-à-dire que les échos ne tombent pas dans les mêmes cases distance que ces impulsions.

En effet, par exemple dans le cas d'une surveillance air-mer, le radar d'un aéronef situé à une altitude h de la mer, ne peut recevoir des échos placés sur la mer au mieux qu'au bout d'un temps 2h/c, les zones de détection utiles étant alors comprises temporellement entre 2h/c et Tr1. Le signal de synchronisation de début de récurrence est donc ajusté de manière à ce que les impulsions reçues tombent dans la fenêtre temporelle comprise entre cette synchro et synchro + 2h/c.

Il est à noter que le traitement proposé est applicable quelles que soient les capacités d'agilité de fréquence d'émission, de fréquence de répétition des impulsions ou de modulation intra-impulsion du radar 2 :

- Agilité de fréquence d'émission : le radar peut disposer de plusieurs canaux fréquentiels réalisant le même traitement en parallèle,
- Agilité de répétition des impulsions : elle se traduit par une variation de la position de l'impulsion du radar 2, de récurrence à récurrence. Néanmoins, les taux de modulation sont toujours faibles en pratique (de l'ordre de 10%) et il est toujours possible d'asservir la période du radar 1 sur la période moyenne du radar 2 ; dans ce cas un nombre limité de cases distance centrées sur une position moyenne fixe sera alloué au traitement des impulsions du radar 2,
- Modulation intra-impulsion : elle n'affecte pas le traitement d'autocorrélation sur l'amplitude du signal.

Enfin, le traitement peut être étendu à la prise en charge de plusieurs émissions simultanées de radars « autres » (radar 2, radar 3, ...), dans la mesure où ces différentes émissions correspondent à des fonctions orthogonales (ou quasi-orthogonales) entre elles, ce qui est toujours le cas dans la pratique. En effet, même en considérant deux radars autres (radar 2 radar 3) émettant à la même fréquence (F2=F3) la même forme d'onde (Tr2 = Tr3), la probabilité pour que les impulsions reçues de ces deux radars soient simultanées est très faible. Le traitement d'autocorrélation sera alors en mesure de détecter deux suites d'impulsions différentes de même période, et l'asservissement de la période du radar 1 pourra s'effectuer sur cette période, les impulsions des deux radars apparaissant alors dans des cases distance distinctes.

La prise en charge de plusieurs émissions simultanées de radars « autres », orthogonales entre elles, est réalisée séquentiellement. L'asservissement de F1 sur F2 et la détermination et l'asservissement de Tr1 sur Tr2 sont réalisés puis, l'asservissement de F1 sur F3 et la détermination et l'asservissement de Tr1 sur Tr3, etc.

D'un point de vue opérationnel, le traitement peut s'effectuer d'abord en mode veille, le radar 1 étant actif ou passif, et son antenne étant en rotation en azimut. Dans ce cas, les détections d'émissions radar effectuées peuvent être utilisées pour pointer l'antenne dans une direction d'intérêt afin de réaliser simultanément la fonction radar de surveillance classique et l'analyse des émissions radar « autres » (fonction ESM).

Inversement, le traitement peut également être activé alors que l'antenne est déjà pointée en direction d'une cible d'intérêt accrochée préalablement par le radar 1 en mode actif.

Une utilisation typique du procédé est l'analyse d'une émission d'un radar de navigation porté par un navire à la mer, alors qu'on réalise simultanément une image ISAR de ce navire.

## Revendications

1.  Procédé de surveillance par un radar dit radar 1 équipé :

    - d'une structure antennaire,
    - de moyens d'émission d'un signal impulsionnel S1 dans une bande de fréquence centrée sur une fréquence F1 au moyen d'un oscillateur local, selon une période de répétition centrée sur une période de récurrence Tr1 et de largeur d'impulsion T1,
    - de moyens de réception de signaux par ladite structure d'antenne dans une bande de fréquence $\Delta F$,
    - d'une unité de traitement des signaux reçus sur un ensemble de N cases distances,

    **caractérisé en ce que** des signaux reçus étant émis par un autre radar dit radar 2 dans une bande de fréquence centrée sur une fréquence F2 telle que F2-F1 $\leq \Delta F$, selon une période de répétition centrée sur une période Tr2 et de largeur d'impulsion T2, les signaux émis par le radar 1 et le radar 2 étant asynchrones, il comprend les étapes suivantes réalisées par ladite unité de traitement pour assurer une fonction ESM :

    - A) asservissement de la fréquence F1 à la fréquence F2, en mesurant la puissance reçue intégrée sur l'ensemble des N cases distances et sur plusieurs récurrences,
    - B) détermination de la période Tr2 et de T2 et asservissement de la période centrée sur Tr1 à une période centrée sur Tr2 avec Tr1 = k.Tr2 ou Tr1 = Tr2/k avec k entier positif.

2.  Procédé de surveillance par un radar selon la revendication précédente, **caractérisé en ce que** l'asservissement de F1 à F2 est réalisé hors émission du radar 1 et comprend une sous-étape consistant à faire varier la fréquence de l'oscillateur local jusqu'à obtenir un maximum de puissance du signal reçu, la fréquence de l'oscillateur local étant fixée à la valeur correspondant à ce maximum de puissance.

3.  Procédé de surveillance par un radar selon l'une des revendications précédentes, **caractérisé en ce que** la détermination de Tr2 et de T2 est basée sur l'autocorrélation temporelle de l'amplitude du signal reçu effectuée sur un temps supérieur à un seuil prédéterminé.

4.  Procédé de surveillance par un radar selon la revendication précédente, **caractérisé en ce que** le signal émis par le radar 1 étant synchronisé par un signal de synchronisation, l'autocorrélation est synchronisée par ce signal de synchronisation.

5.  Procédé de surveillance par un radar selon l'une des revendications 3 ou 4, **caractérisé en ce que** cette détermination de Tr2 est réalisée hors émission de S1.

**6.** Procédé de surveillance par un radar selon l'une des revendications précédentes, **caractérisé en ce que** le signal émis par le radar 1 étant synchronisé par un signal de synchronisation, ce signal de synchronisation est adapté pour que les signaux du radar 2 soient reçus dans une fenêtre temporelle déterminée en fonction de ce signal de synchronisation.

**7.** Procédé de surveillance par un radar selon l'une des revendications précédentes, **caractérisé en ce que** chaque récurrence de la période de répétition comportant des cases distance temporelles, certaines cases distance sont allouées à la réception d'échos générés par les impulsions émises par le radar 1.

**8.** Procédé de surveillance par un radar selon l'une des revendications précédentes, **caractérisé en ce que** les étapes A) et B) sont réalisées de façon séquentielle selon des intervalles de temps prédéterminés.

**9.** Procédé selon l'une quelconque des revendications 1 à 7, **caractérisé en ce que** les étapes A) et B) sont déclenchées suite à la détection d'un asynchronisme du signal reçu par rapport au signal émis par le radar 1 ou à la détection d'une puissance de signal dépassant un seuil prédéterminé.

**10.** Procédé de surveillance par un radar selon l'une des revendications précédentes, **caractérisé en ce que** le radar 1 est successivement en mode émission et en mode réception sans émission.

**11.** Procédé de surveillance par un radar selon l'une des revendications précédentes, **caractérisé en ce que** l'antenne du radar 1 est en rotation en azimut.

**12.** Procédé de surveillance par un radar selon l'une des revendications précédentes, **caractérisé en ce que** des signaux reçus étant émis par d'autres radars dits radar 3, radar 4, ... radar n respectivement associés aux fréquences F3 avec $F3-F1 \leq \Delta F$, F4 avec $F4-F1 \leq \Delta F$, ..., Fn avec $Fn-F1 \leq \Delta F$ aux périodes de répétition Tr3, Tr4, .. Trn et aux largeurs d'impulsion T3, T4, ...Tn, les signaux émis par le radar 1 et les radar 3, radar 4 ,... radar n étant asynchrones, il comprend les étapes A) et B) séquentiellement réalisées pour F3, Tr3, T3 puis F4, Tr4, T4, puis ....Fn, Trn, Fn.

## Patentansprüche

**1.** Verfahren zur Überwachung per Radar, Radar 1 genannt, das mit Folgendem ausgerüstet ist:

- einer Antennenstruktur;
- Mitteln zum Senden, mit einem Lokaloszillator, eines Impulssignals S1 in einem auf einer Frequenz F1 zentrierten Frequenzband gemäß einer Wiederholperiode, zentriert auf einer Rekursionsperiode Tr1 und mit einer Impulsbreite T1;
- Mitteln zum Empfangen von Signalen über die Antennenstruktur in einem Frequenzband $\Delta F$,
- einer Einheit zum Verarbeiten von auf einem Satz von N Bereichsbins empfangenen Signalen,

**dadurch gekennzeichnet, dass** es, wenn empfangene Signale von einem anderen Radar, Radar 2 genannt, in einem auf einer Frequenz F2, wobei $F2-F1 \leq \Delta F$ ist, zentrierten Frequenzband gemäß einer Wiederholperiode gesendet werden, zentriert auf einer Periode Tr2 und mit einer Impulsbreite T2, wobei die von Radar 1 und von Radar 2 gesendeten Signale asynchron sind, die folgenden Schritte beinhaltet, die von der Verarbeitungseinheit ausgeführt werden, um eine ESM-Funktion bereitzustellen:

- A) Regeln der Frequenz F1 auf die Frequenz F2 unter Messung der empfangenen Leistung integriert auf dem Satz von N Bereichsbins und über mehrere Rekursionen;
- B) Ermitteln der Periode Tr2 und T2 und Regeln der auf Tr1 zentrierten Periode auf eine auf Tr2 zentrierte Periode, wobei Tr1 = k.Tr2 oder Tr1 = Tr2/k ist, wobei k eine positive ganze Zahl ist.

**2.** Radarüberwachungsverfahren nach dem vorherigen Anspruch, **dadurch gekennzeichnet, dass** das Regeln von F1 auf F2 ohne Sendung vom Radar 1 ausgeführt wird und einen Teilschritt beinhaltet, der das Verändern der Frequenz des Lokaloszillators beinhaltet, bis eine maximale Leistung des empfangenen Signals erhalten ist, wobei die Frequenz des Lokaloszillators auf den Wert eingestellt wird, der diesem Leistungsmaximum entspricht.

**3.** Radarüberwachungsverfahren nach einem der vorherigen Ansprüche, **dadurch gekennzeichnet, dass** das Ermitteln von Tr2 und von T2 auf der zeitlichen Autokorrelation der Amplitude des empfangenen Signals basiert, ausgeführt über eine Zeit, die länger ist als ein vorbestimmter Schwellenwert.

4. Radarüberwachungsverfahren nach dem vorherigen Anspruch, **dadurch gekennzeichnet, dass**, da das von Radar 1 gesendete Signal von einem Synchronisationssignal synchronisiert wird, die Autokorrelation durch das Synchronisationssignal synchronisiert wird.

5. Radarüberwachungsverfahren nach Anspruch 3 oder 4, **dadurch gekennzeichnet, dass** diese Ermittlung von Tr2 ohne Sendung von S1 ausgeführt wird.

6. Radarüberwachungsverfahren nach einem der vorherigen Ansprüche, **dadurch gekennzeichnet, dass**, da das von Radar 1 gesendete Signal mit einem Synchronisationssignal synchronisiert wird, dieses Synchronisationssignal so ausgelegt ist, dass die Signale von Radar 2 in einem Zeitfenster empfangen werden, das in Abhängigkeit von diesem Synchronisationssignal bestimmt wird.

7. Radarüberwachungsverfahren nach einem der vorherigen Ansprüche, **dadurch gekennzeichnet, dass** bei jeder Rekursion der Wiederholperiode, die zeitliche Bereichsbins enthält, bestimmte Bereichsbins beim Empfang von Echos zugeordnet werden, die von den von Radar 1 gesendeten Impulsen erzeugt werden.

8. Radarüberwachungsverfahren nach einem der vorherigen Ansprüche, **dadurch gekennzeichnet, dass** die Schritte A) und B) sequentiell gemäß vorbestimmten Zeitintervallen ausgeführt werden.

9. Verfahren nach einem der Ansprüche 1 bis 7, **dadurch gekennzeichnet, dass** die Schritte A) und B) nach dem Erkennen eines Asynchronismus des empfangenen Signals in Bezug auf das von Radar 1 gesendete Signal oder nach dem Erkennen einer eine vorbestimmte Schwelle übersteigenden Signalleistung ausgelöst werden.

10. Radarüberwachungsverfahren nach einem der vorherigen Ansprüche, **dadurch gekennzeichnet, dass** das Radar 1 sukzessiv im Sendemodus und im Empfangsmodus ohne Sendung ist.

11. Radarüberwachungsverfahren nach einem der vorherigen Ansprüche, **dadurch gekennzeichnet, dass** die Antenne von Radar 1 in Azimutrichtung rotiert.

12. Radarüberwachungsverfahren nach einem der vorherigen Ansprüche, **dadurch gekennzeichnet, dass** es, wenn die empfangenen Signale von anderen Radars, jeweils Radar 3, Radar 4, ... Radar n genannt, in Verbindung mit den Frequenzen F3, wobei $F3-F1 \leq \Delta F$, F4, wobei $F4-1 \leq \Delta F$, ..., Fn, wobei $Fn-F1 \leq \Delta F$ ist, in den Wiederholperioden Tr3, Tr4, ..Tm und mit den Impulsbreiten T3, T4, ...Tn gesendet werden, wobei die von Radar 1 und von Radar 3, Radar 4, ... Radar n gesendeten Signale asynchron sind, die Schritte A) und B) beinhaltet, die sequentiell für F3, Tr3, T3, dann F4, Tr4, T4, dann ...Fn, Trn, Fn ausgeführt werden.

**Claims**

1. A surveillance method using a radar, referred to as radar 1, provided with:

   - an antenna structure;
   - means for transmitting, by means of a local oscillator, a pulse signal S1 in a frequency band centred on a frequency F1, according to a repetition period that is centred on a recurrence period Tr1 and has a pulse width T1;
   - means for receiving signals via said antenna structure in a frequency band $\Delta F$;
   - a unit for processing signals received on a set of N range bins,

   **characterised in that**, with received signals being transmitted by another radar, referred to as radar 2, in a frequency band centred on a frequency F2 such that $F2-F1 \leq \Delta F$, according to a repetition period that is centred on a period Tr2 and has a pulse width T2, with the signals transmitted by said radar 1 and said radar 2 being asynchronous, it comprises the following steps carried out by said processing unit so as to provide an ESM function:

   - A) driving the frequency F1 to frequency F2 whilst measuring the received power integrated over the set of N range bins and over a plurality of recurrences;
   - B) determining the period Tr2 and T2 and driving the period centred on Tr1 to a period centred on Tr2, with Tr1 = k.Tr2 or Tr1 = Tr2/k, with k being a positive integer.

**2.** The radar surveillance method according to the preceding claim, **characterised in that** the driving of F1 to F2 is carried out without transmission from said radar 1 and comprises a sub-step that involves varying the frequency of the local oscillator until a maximum power of the received signal is obtained, with the frequency of said local oscillator being set to the value that corresponds to this maximum power.

**3.** The radar surveillance method according to any one of the preceding claims, **characterised in that** determining Tr2 and T2 is based on the temporal autocorrelation of the amplitude of the received signal carried out over a time period that is greater than a predetermined threshold.

**4.** The radar surveillance method according to the preceding claim, **characterised in that**, with the signal transmitted by said radar 1 being synchronised by a synchronisation signal, the autocorrelation is synchronised by said synchronisation signal.

**5.** The radar surveillance method according to claim 3 or 4, **characterised in that** said determination of Tr2 is carried out without transmission of S1.

**6.** The radar surveillance method according to any one of the preceding claims, **characterised in that**, with the signal transmitted by said radar 1 being synchronised by a synchronisation signal, said synchronisation signal is adapted so that the signals of said radar 2 are received in a time window that is determined as a function of said synchronisation signal.

**7.** The radar surveillance method according to any one of the preceding claims, **characterised in that**, with each recurrence of the repetition period comprising temporal range bins, certain range bins are allocated upon receipt of echoes generated by the pulses emitted by said radar 1.

**8.** The radar surveillance method according to any one of the preceding claims, **characterised in that** steps A) and B) are carried out sequentially according to predetermined time intervals.

**9.** The method according to any one of claims 1 to 7, **characterised in that** steps A) and B) are triggered following the detection of an asynchronism of the received signal compared to the signal transmitted by said radar 1 or following the detection of a signal power that exceeds a predetermined threshold.

**10.** The radar surveillance method according to any one of the preceding claims, **characterised in that** said radar 1 is successively in transmission mode and in reception mode without transmission.

**11.** The radar surveillance method according to any one of the preceding claims, **characterised in that** the antenna of said radar 1 rotates by azimuth.

**12.** The radar surveillance method according to any one of the preceding claims, **characterised in that**, with the received signals being transmitted by other radars, referred to as radar 3, radar 4, ... radar n, respectively, associated with the frequencies F3, with $F3-F1 \leq \Delta F$, F4, with $F4-1 \leq \Delta F$, ..., Fn, with $Fn-F1 \leq \Delta F$, with the repetition periods Tr3, Tr4, ..Tm and with the pulse widths T3, T4, ...Tn, the signals transmitted by said radar 1 and said radar 3, radar 4, ...radar n being asynchronous, it comprises said steps A) and B) sequentially carried out for F3, Tr3, T3, then F4, Tr4, T4, then ...Fn, Trn, Fn.

Impulsion
radar 1 émise

Impulsion
radar 2 reçue

**Tr1**

**Tr2**

## FIG.1a

Impulsions du radar
2 détectées au
cours du temps

Ouverture d'antenne
du radar 1, incluant le
lobe principal et
plusieurs lobes
secondaires

Ecran PPI

## FIG.1b

FIG.2a

FIG.2b

Filtre passe
bande 80 MHz

Fech 100 MHz

I

CAN

Q

FFT 8 points
(temps court)

| | Case dist 1 | Case dist 2 | | Case dist i | | | Case dist N |
|---|---|---|---|---|---|---|---|
| Récurrence 1 | Case dist 1 | Case dist 2 | | Case dist i | | | Case dist N |
| Récurrence 2 | Case dist 1 | Case dist 2 | | Case dist i | | | Case dist N |
| Récurrence j | Case dist 1 | Case dist 2 | | Case dist i | | | Case dist N |
| | Case dist 1 | Case dist 2 | | Case dist i | | | Case dist N |
| Récurrence M | Case dist 1 | Case dist 2 | | Case dist i | | | Case dist N |

Post intégration des puissances reçues par case distance

Somme sur l'ensemble des cases distance

Ecran PPI

-Synchro radar
-Générateur de formes d'onde
- Antenne radar

FIG.3

Impulsion
radar 1 émise

Impulsion
radar 2 reçue

**Tr1**

Tr2

Signal de synchronisation

Autocorrélation temps long sur N échantillons

## FIG.4

Tr2=500μs, T2 = 50μs

Tr2

Tr2

Tr2

2T2

t [s]

## FIG.5

FIG.6

FIG.7

FIG.8

**EP 2 686 699 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2884929